# EUROPÄISCHE PATENTSCHRIFT

(11) **EP 2 032 377 B1**
(45) Veröffentlichungstag und Bekanntmachung des Hinweises auf die Patenterteilung: **05.05.2010**
(21) Anmeldenummer: 07728840.5
(22) Anmeldetag: 07.05.2007
(51) Int. Cl.: B60G 17/015, B60G 11/27, F16F 9/04

(54) **VERFAHREN ZUR REGELUNG EINER NIVEAUREGELANLAGE**
METHOD FOR CONTROLLING A LEVEL CONTROL SYSTEM
PROCÉDÉ DE RÉGLAGE D'UNE INSTALLATION DE RÉGULATION DE NIVEAU

(30) Priorität: 12.06.2006 DE 102006027442
(43) Veröffentlichungstag der Anmeldung: 11.03.2009
(73) Patentinhaber: Continental Aktiengesellschaft, 30165 Hannover (DE)
(72) Erfinder: STILLER, Alexander, 30826 Garbsen (DE); NETTELMANN, Marc, 31061 Alfeld (DE)
(74) Vertreter: Finger, Karsten
(86) Internationale Anmeldenummer: PCT/EP2007/054387
(87) Internationale Veröffentlichungsnummer: WO 2007/144233

(56) Entgegenhaltungen:
- DE-A1- 3 403 649
- DE-A1- 3 502 338
- DE-A1- 3 819 839
- DE-C1- 19 940 198
- JP-A- 53 026 021
- JP-A- 58 122 211
- US-A- 4 634 143

## Beschreibung

Die Erfindung betrifft gemäß dem Oberbegriff des Anspruchs 1 ein Verfahren zur Regelung einer Niveauregelanlage eines Kraftfahrzeuges, enthaltend eine Luftfeder, die ein Luftvolumen umschließt, und ein Zusatzvolumen, mit dem das Luftvolumen der Luftfeder über ein Ventil in Verbindung steht, und einer Regeleinheit zur Ansteuerung des Ventils und zur Ermittlung eines Höhensignals.

Eine Niveauregelanlage der eingangs genannten Art ist beispielsweise aus der DE1940198C1 bekannt. In der DE1940198C1 wird ein Verfahren zur Regelung eines Systems beschrieben, wobei eine Luftfeder über eine regelbare Drossel mit einem Zusatzvolumen verbunden ist. Die Regelung der Drossel erfolgt anhand der erforderlichen Federsteifigkeit der Luftfeder und des Gesamtdämpfungsbedarfs der Luftfeder-Dämpfer-Anordnung der Niveauregelanlage.

Weiterhin ist es aus der DE19710399C2 bekannt, die Verbindung einer Luftfeder zu einem Zusatzvolumen in Abhängigkeit des Druckes in der Luftfeder bzw. innerhalb des Zusatzvolumens bei geringen Drücken frei zu schalten oder bei hohen Drücken zu schließen.

Der Nachteil dieser bekannten Niveauregelanlagen mit Luftfeder und Zusatzvolumen besteht darin, dass eine Vielzahl von Sensoren, wie z.B. Drucksensoren, benötigt wird oder ein sehr hoher regelungstechnischer Aufwand zur Ermittlung der Regelungsgröße, z.B. Dämpfungsbedarf, erforderlich ist.

Die DE 34 03 649 offenbart ein Radaufhängungssystem für Automobile, bei dem neben der Verstellung der Dämpfung eine Verstellung der der Federkonstante bzw. Härte einer parallel zu anderen Federn wirkenden Luftfederung dadurch erfolgt, dass eine Verbindung zwischen einer Luftfederungshauptkammer und einer Luftfederungshilfskammer geschaltet wird. Die Verbindung erfolgt abhängig von den Signalen eines Niveaufühler für den Nachweis des zusammengedrückten oder gedehnten Zustandes der Aufhängung.

Der zur Verstellung notwendige Regelaufwand ist bei dieser Ausführung nicht unerheblich. Ein weiterer Nachteil bei bekannten Niveauregelanlagen besteht darin, dass die Regelung aufgrund der Druckbegrenzung nicht immer den Anforderungen an den Fahrzeugkomfort entspricht.

Der Erfindung liegt die Aufgabe zugrunde, ein Verfahren zur Regelung einer Niveauregelanlage der eingangs genannten Art zu schaffen, bei dem die Verbindung zwischen einer Luftfeder und einem Zusatzvolumen mit einfachen Mitteln steuerbar oder regelbar ist.

Diese Aufgabe wird erfindungsgemäß durch die Merkmale des Anspruchs 1 gelöst.

Der Vorteil der Erfindung ist darin zu sehen, dass die Ansteuerung, Regelung oder Schaltung des Ventils immer dann erfolgen kann, wenn der Druckunterschied zwischen dem Druck in der Luftfeder und dem Druck in dem Zusatzvolumen relativ gering ist, ohne dabei die einzelnen Drücke selbst messen zu müssen. Es ist damit möglich - vorausschauend, weil druckunabhängig - bereits vor einer Erhöhung des Druckunterschiedes das Ventil anzusteuern. Ein weiterer Vorteil besteht darin, dass ein Höhensignal von z.B. ein oder mehreren Höhensensoren für die Regelung einer Niveauregelanlage immer vorhanden ist, so dass mit dem erfindungsgemäßen Verfahren ohne zusätzliche Sensoren oder ohne zusätzlichen Berechnungsaufwand die Regelung bzw. Ansteuerung des Ventils zwischen der Luftfeder und dem Zusatzvolumen erfolgen kann. Vorteilhaft ist auch, dass eine ungewollte Höhenverstellung durch eine Verbindung der Luftfeder mit dem Zusatzvolumen bei zu großen Druckunterschieden sicher vermieden werden kann, da eine entsprechend großer Druckunterschied nicht entstehen kann.

Der Vorteil der Erfindung ist weiterhin darin zu sehen, dass die Druckunterschiede zwischen dem Druck in der Luftfeder und dem Druck in dem Zusatzvolumen im Bereich der Nulllage im Vergleich zu Drücken bei vollständiger Ein- oder Ausfederung gering sind und somit eine ungewollte Höhenverstellung durch eine Verbindung der Luftfeder mit dem Zusatzvolumen sicher vermieden wird. Die möglichen Druckunterschiede während der Verbindung zwischen Luftfeder und Zusatzvolumen werden auf ein möglichst geringes Maß beschränkt, so dass keine durch den Fahrzeugführer sichtbaren oder spürbaren Einflüsse durch die Ansteuerung oder Regelung des Ventils entstehen.

Gemäß einer Weiterbildung der Erfindung nach Anspruch 2 ist vorgesehen, dass die Amplitude des Höhensignals in Ein- und/oder Ausfederrichtung der Luftfeder die Nulllage durchläuft. Der Vorteil dieser Weiterbildung ist darin zu sehen, dass die Verbindung der Luft feder mit dem Zusatzvolumen annähernd immer bei ein und demselben Druck im Nulldurchgang erfolgt und somit keine ungewollte Höhenverstellung erfolgen kann.

Die Aufgabe wird erfindungsgemäß durch die Niveauregelanlage nach Anspruchs 3 gelöst.

Ausführungsbeispiele und weitere Vorteile werden im Zusammenhang mit der nachstehenden Figur erläutert, darin zeigen:

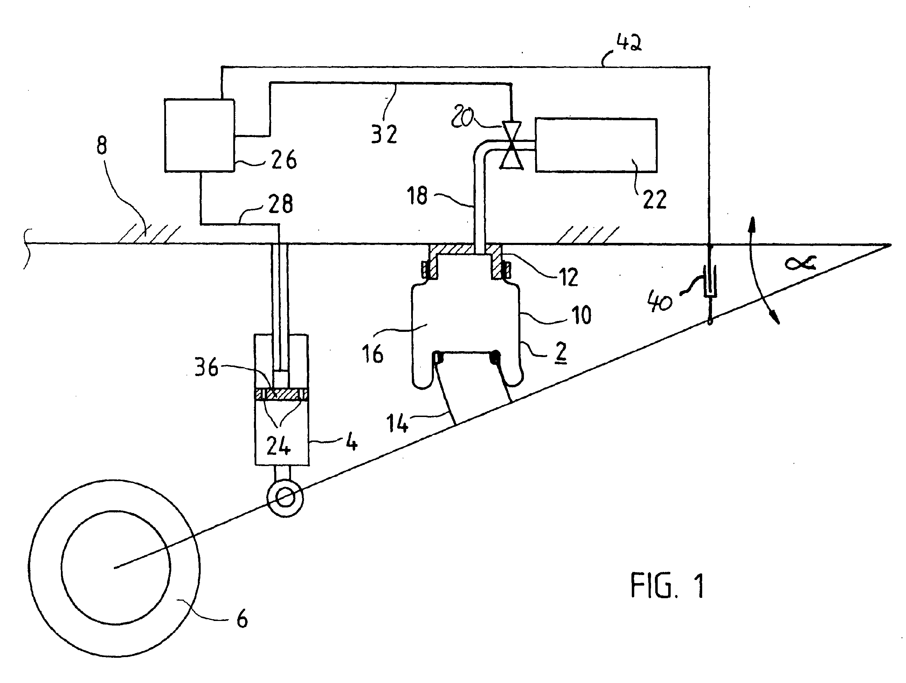

Fig. 1 einen Ausschnitt eines Kraftfahrzeuges mit einer Niveauregelanlage.

Figur 1 zeigt in stark schematisierter Darstellung ein Kraftfahrzeug mit einer Niveauregelanlage, das eine Luftfeder 2 und einen regelbaren Stoßdämpfer 4 enthält, wobei nur die für die nachfolgenden Erläuterungen notwendigen Bestandteile gezeigt sind. In dem gezeigten Ausführungsbeispiel ist der Stoßdämpfer 4 beispielhaft als pneumatischer Stoßdämpfer dargestellt, selbstverständlich kann das System jedoch auch andere Stoßdämpfer bekannter Bauarten enthalten. Auch ist eine Integration des Dämpfers in die Luftfeder zu einer sogenannten Feder-Dämpfer-Einheit möglich.

Mit Hilfe der Luftfeder 2 und des Stoßdämpfers 4 ist ein Kraftfahrzeugrad 6 gegenüber einem Fahrzeugaufbau 8 des Kraftfahrzeuges federnd gelagert. Die Luftfeder 2 ist zu dem regelbaren Stoßdämpfer 4 parallel geschaltet, d.h. bei einer Einfederbewegung des Kraftfahrzeugrades 6 werden die Luftfeder 2 und der Stoßdämpfer 4 zwangsweise immer gleichzeitig verkürzt, wohingegen bei einer Ausfederbewegung des Kraftfahrzeugrades 6 die Luftfeder 2 und der Stoßdämpfer 4 zwangsweise immer gleichzeitig verlängert werden. Der regelbare Stoßdämpfer 4 weist in einem Kolben 36 und regelbare Drosselöffnungen 24 auf, durch die bei einer Verlängerung oder Verkürzung des Stoßdämpfers 4 ein Dämpfungsmedium von einer Teilkammer in eine andere Teilkammer des Stoßdämpfers 4 strömt. Der Stoßdämpfer 4 kann beispielsweise als hydraulischer oder pneumatischer Stoßdämpfer aufgebaut sein. Derartige Stoßdämpfer sind an sich bekannt, so dass sie hier nicht näher erläutert werden sollen.

Zusätzlich zu der Luftfeder 2 und dem Stoßdämpfer 4 weist das System ein Zusatzvolumen 22 auf, das außerhalb des Luftvolumens 16 der Luftfeder 2 und des Stoßdämpfers 4 angeordnet ist. Die Größe des Zusatzvolumens 22 ist unabhängig von der dem momentanen Einfederungszustand der Luftfeder und von der momentanen Stellung des regelbaren Stoßdämpfers 4, d. h. von der momentanen Stellung des Kolbens 36.

Die Luftfeder 2 enthält einen Rollbalg 10, der in an sich bekannter Art und Weise zwischen einem Anschlussteil 12 und einem Abrollkolben 14 angeordnet ist und ein Luftvolumen 16 umschließt. Das Luftvolumen 16 steht über eine Leitung 18, die durch das Anschlussteil 12 geführt ist, über ein Ventil 20 mit dem Zusatzvolumen 22 in Verbindung, die unabhängig von dem Drosselöffnungen 24 im Kolben 36 regelbar ist. Das Zusatzvolumen 22 ist ferner vorzugsweise starr ausgebildet, d.h. in seiner Größe unveränderlich. Alternativ ist es möglich, das Zusatzvolumen 22 in seiner Größe veränderlich auszubilden. Dies kann beispielsweise dadurch erfolgen, dass das Zusatzvolumen 22 durch eine Trennwand in zwei Kammern unterteilt wird, in der sich regelbare Drosseln, die insbesondere vollkommen geschlossen und geöffnet werden können, befinden. Das Ventil 20 kann beispielsweise als ein pneumatisch oder magnetisch schaltbares oder als stufenlos regelbares Ventil 20 ausgebildet sein. Andere dem Fachmann geläufige Aufbauten eines Ventils sind denkbar.

Die Drosseleinstellung sämtlicher Drosseln des Systems ist von der Regeleinheit 26 unabhängig voneinander regelbar. Die Drosseleinstellung (d. h. im Ausführungsbeispiel die Größe der Drosselöffnungen 24) und damit die Größe der Dämpfung des Stoßdämpfers 4 ist von der Regeleinheit 26 über eine Leitung 28 regelbar. Die Leitung 18 bzw. das Ventil 20 über die das Luftvolumen 16 der Luftfeder 2 mit dem Zusatzvolumen 22 verbunden ist, ist ebenfalls über eine Leitung 32 von der Regeleinheit 26 regelbar. Durch die Stellung des Ventils 20 kann die Federsteifigkeit der Luftfeder 10 verstellt oder ggf. stufenlos eingestellt werden. Bei vollständig geschlossener Leitung 18 bzw. Ventil 20 weist die Luftfeder 10 die größte Federsteifigkeit und bei vollständig geöffneter Leitung 18 bzw. Ventil 20 weist die Luftfeder 10 die kleinste Federsteifigkeit auf. Zusätzlich wird der Regeleinheit 26 das Höhensignal 42 des Höhensensors 40 zugeführt. Das Höhensignal 42 gibt entweder die vom Höhensensor 40 direkt gemessene Fahrzeughöhe wieder oder den Winkel α an, wobei die Fahrzeughöhe dann mit Hilfe des Winkels α von der Regeleinheit 26 berechnet werden kann.

Die Regelung des Ventils 20 zwischen der Luftfeder 2 und dem Zusatzvolumen 22 erfolgt durch die Regeleinheit 26 im Einzelnen wie folgt:

In der Regeleinheit 26 wird in Abhängigkeit von der Fahrsituation des Kraftfahrzeuges die gewünschte Federsteifigkeit der Luftfeder 2, "Komfort" - was einer durchgeschalteten Verbindung mit dem Zusatzvolumen 22 entspricht - oder "Sportlich" - was einer geschlossenen Verbindung mit dem Zusatzvolumen 22 entspricht - , vorgegeben. Nur bei der gewählten "Komfort" - Einstellung wird die Federsteifigkeit der Luftfeder 2 in Abhängigkeit des Höhensignals 42 über die Leitung 32 mit dem Ventil 20 eingestellt. Das Höhensignal 42 kann direkt von einem Höhensensor 40 je Fahrzeug, Fahrzeugachse, Stoßdämpfer 4 oder Luftfeder 2 gemessen werden.

Die Regelung bzw. Steuerung des Ventils 20 erfolgt vorzugsweise im Bereich der Nulllage der Ein- und Ausfederrichtung der Luftfeder 2. Als Nulllage der Luftfeder 2 wird die Fahrzeughöhe im Niveauausgeglichenen Ruhezustand des Fahrzeuges des jeweiligen Fahrzeughöhenniveaus bezeichnet. Diese Nulllage ist abhängig vom Fahrzeugtyp und vom Fahrzeughöhenniveau, z.B. Tiefniveau, Normalniveau oder Hochniveau/Geländeniveau. Als Fahrzeughöhe ist die Höhe des Fahrzeugaufbaus 8 gegenüber dem Fahrzeugrad 6 bzw. der Aufstandsfläche des Fahrzeugrades 6 zu verstehen.

Im Bereich der Nulllage sind die möglichen Druckdifferenzen, welche zwischen dem durchgeschalteten oder gesperrten Luftfedervolumen 16 und dem Zusatzvolumen 22 entstehen können, gering und haben keinen negativen Einfluss auf das Höhenniveau der Luftfeder 2 und damit das Fahrverhalten das Fahrzeuges insgesamt. Es wird nur dann eine Verbindung zwischen dem Zusatzvolumen 22 und dem Luftfedervolumen 16 hergestellt, wenn dies für den Fahrkomfort erforderlich und förderlich ist. Bei großen Amplituden im Bereich der maximalen oder minimalen Ein- oder Ausfederung der Luftfeder 2 ist dagegen eine höhere Federsteifigkeit bei geringerem Komfort sinnvoller, um einer noch stärkere Ein- oder Ausfederung stärker entgegen zu wirken, als mit einer geringeren Federsteifigkeit der Luftfeder 2 bei verbundenem Zusatzvolumen 22. Durch die wegabhängige Regelung bzw. Steuerung des Ventils 20 besteht auch die Möglichkeit, eine vorausschauende und frühzeitige Regelung bzw. Steuerung des Ventils 20 durchzuführen, um damit eine der jeweiligen Fahrsituation bestmöglich angepasste Federsteifigkeit der Luftfeder 2 durchzuführen, wobei beispielsweise in Abhängigkeit der Ein- oder Ausfederrichtung der Luftfeder 2 unterschiedliche Regelbereiche in der Nähe der Nulllage festlegbar sind.

### Bezugszeichenliste

### (Teil der Beschreibung)

- 2: Luftfeder
- 4: Stoßdämpfer
- 6: Kraftfahrzeugrad
- 8: Fahrzeugaufbau
- 10: Rollbalg
- 12: Anschlussteil
- 14: Abrollkolben
- 16: Luftvolumen
- 18: Leitung
- 20: Ventil
- 22: Zusatzvolumen
- 24: Drosselöffnungen des Stoßdämpfers
- 26: Regeleinheit
- 28: Leitung
- 32: Leitung
- 40: Höhensensor
- 42: (Leitung-)Höhensignal

- α: Winkel

## Patentansprüche

1. Verfahren zur Regelung einer Niveauregelanlage eines Kraftfahrzeuges, enthaltend eine Luftfeder (2), die ein Luftvolumen (16) umschließt, und ein Zusatzvolumen (22), mit dem das Luftvolumen (16) der Luftfeder (2) über ein Ventil (20) in Verbindung steht, und einer Regeleinheit (26) zur Ansteuerung des Ventils (20) und zur Ermittlung eines Höhensignals (42),
**dadurch gekennzeichnet, dass**
das Ventil (20) in Abhängigkeit des Höhensignals (42) zum Öffnen oder Schließen der Verbindung zwischen den Luftvolumina (16) und (22) angesteuert und/oder geregelt wird, wobei das Ventil (20) angesteuert und/oder geregelt wird, nur wenn die Amplitude des Höhensignals (42) in Ein- und/oder Ausfederrichtung der Luftfeder (2) im Bereich der Nulllage liegt und weniger als 20% von der maximal möglichen Amplitude in Ein- und/oder Ausfederrichtung beträgt.

2. Verfahren zur Regelung einer Niveauregelanlage eines Kraftfahrzeuges nach Anspruch 1, **dadurch gekennzeichnet, dass**
die Amplitude des Höhensignals (42) in Ein- und/oder Ausfederrichtung der Luftfeder (2) die Nulllage durchläuft.

3. Niveauregelanlage für ein Kraftfahrzeug mit einer Regeleinheit zur Durchführung eines Verfahrens nach Anspruch 1.

## Claims

1. Method for controlling a ride level control system of a motor vehicle, containing an air spring (2) which encloses a volume (16) of air and an additional volume (22) with which the volume (16) of air is connected to the air spring (2) via a valve (20), and a control unit (26) for actuating the valve (20) and for determining a level signal (42),
**characterized in that**
the valve (20) is actuated and/or controlled as a function of the level signal (42) for opening or closing the connection between the volumes (16) and (22) of air, wherein the valve (20) is actuated and/or controlled only if the amplitude of the level signal (42) in the spring compression and/or spring extension directions of the air spring (2) is in the region of the zero position and is less than 20% of the maximum possible amplitude in the spring compression and/or spring extension directions.

2. Method for controlling a ride level control system of a motor vehicle according to Claim 1, **characterized in that**
the amplitude of the level signal (42) in the spring compression and/or spring extension directions of the air spring (2) passes through the zero position.

3. Ride level control system for a motor vehicle having a control unit for carrying out a method according to Claim 1.

## Revendications

1. Procédé de réglage d'une installation de régulation de niveau d'un véhicule automobile, contenant un ressort pneumatique (2), qui renferme un volume d'air (16), et un volume supplémentaire (22), avec lequel le volume d'air (16) du ressort pneumatique (2) est en liaison par le biais d'une soupape (20), et une unité de régulation (26) pour commander la soupape (20) et pour déterminer un signal de hauteur (42),
**caractérisé en ce que**
la soupape (20) est commandée et/ou régulée en fonction du signal de hauteur (42) de manière à ouvrir ou fermer la connexion entre les volumes d'air (16) et (22), la soupape (20) étant commandée et/ou régulée uniquement lorsque l'amplitude du signal de hauteur (42) dans la direction de compression et/ou de détente du ressort pneumatique (2) est de l'ordre de zéro et vaut moins de 20% de l'amplitude maximale possible dans la direction de compression et/ou de détente du ressort.

2. Procédé de réglage d'une installation de régulation de niveau d'un véhicule automobile selon la revendication 1, **caractérisé en ce que**
l'amplitude du signal de hauteur (42) dans la direction de compression et/ou de détente du ressort passe par zéro.

3. Installation de régulation de niveau d'un véhicule automobile comprenant une unité de régulation pour mettre en oeuvre un procédé selon la revendication 1.
